# EUROPÄISCHE PATENTSCHRIFT

(11) **EP 3 762 539 B1**
(45) Veröffentlichungstag und Bekanntmachung des Hinweises auf die Patenterteilung: **03.07.2024**
(21) Anmeldenummer: 19701594.4
(22) Anmeldetag: 18.01.2019
(51) Int. Cl.: D21F 1/00

(54) **VERFAHREN ZUR HERSTELLUNG EINER GRUNDSTRUKTUR FÜR EINE PAPIERMASCHINENBESPANNUNG**
METHOD FOR PRODUCING A BASE STRUCTURE FOR A PAPERMACHINE FABRIC
PROCÉDÉ DE FABRICATION D'UNE STRUCTURE DE BASE POUR UNE TOILE DE MACHINE À PAPIER

(30) Priorität: 09.03.2018 DE 102018105433
(43) Veröffentlichungstag der Anmeldung: 13.01.2021
(73) Patentinhaber: Voith Patent GmbH, 89522 Heidenheim (DE)
(72) Erfinder: KÖCKRITZ, Uwe, 89522 Heidenheim (DE); KALLENBERG, Jens, 89542 Herbrechtingen (DE); STRAUB, Michael, 89555 Steinheim (DE); FITZER, Cedric, 89264 Weißenhorn (DE); HOLL, Reinhard, 89415 Lauingen (DE)
(74) Vertreter: Voith Patent GmbH - Patentabteilung
(86) Internationale Anmeldenummer: PCT/EP2019/051201
(87) Internationale Veröffentlichungsnummer: WO 2019/170308

(56) Entgegenhaltungen:
- WO-A1-2015/185278
- WO-A1-2016/037825

## Beschreibung

Die vorliegende Erfindung betrifft ein Verfahren zur Herstellung einer Grundstruktur einer Bespannung für den Einsatz in einer eine Faserstoffbahn herstellenden und/oder verarbeitenden Maschine, insbesondere Papiermaschine, wobei die Bespannungsgrundstruktur ein aus wenigstens zwei Schichten gebildetes Laminat aufweist und die Schichten im Wesentlichen aus Polymermaterial gebildet sind, wobei das Verfahren die folgenden Schritte umfasst: lokales Aufschmelzen des Polymermaterials der beiden Schichten durch Strahlungseinwirkung aus einer Strahlenquelle und Aufeinanderpressen des aufgeschmolzenen Polymermaterials der beiden Schichten, wobei hierzu das Polymermaterial der beiden Schichten unter Ausbildung eines Einlaufspalts in einen durch zwei Anpresswalzen gebildeten Pressnip geführt wird.

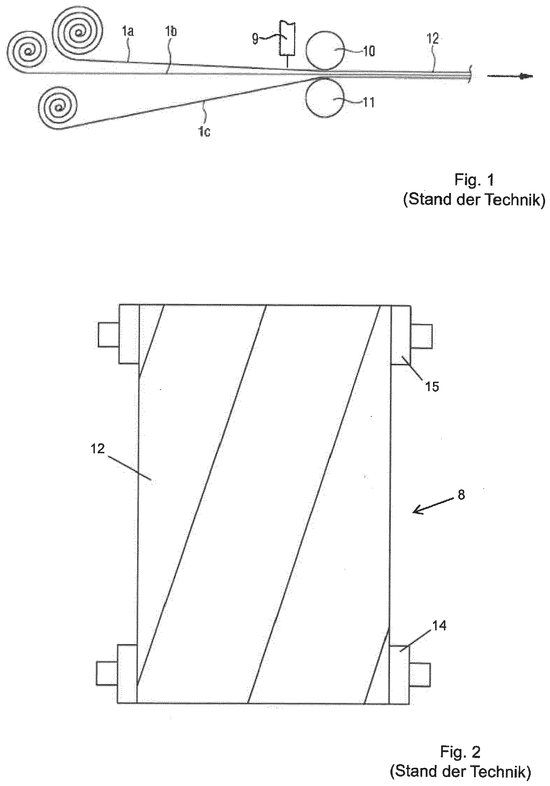

Ein derartiges Herstellverfahren ist aus der Druckschrift WO 2015/185278 A1 bekannt. Wie in Figur 1 gezeigt ist, offenbart die WO 2015/185278 A1, aus mehreren als Rollenware vorliegenden bandartigen Polymerfolien 1a, 1b, 1c ein Laminat 12 zu bilden, indem diese mittels Strahlungseinwirkung durch eine Strahlenquelle 9, beispielsweise einen Laser, angeschmolzen und kurz darauf durch Krafteinwirkung in einem durch zwei Anpresswalzen 10, 11 gebildeten Nip in noch angeschmolzenem Zustand zusammengepresst werden. Im nachfolgenden, in der Figur 2 gezeigten, Verfahrensschritt wird das Laminat 12, welches eine geringere Breite als die Breite der daraus herzustellenden Grundstruktur 8 für eine Papiermaschinenbespannung hat, in Richtung der Breite der herzustellenden Grundstruktur 8 helixartig fortschreitend um zwei zueinander beabstandete Wickelwalzen 14, 15 gewickelt. Hierdurch wird eine als Endlosband vorliegende Grundstruktur 8 für eine Papiermaschinenbespannung erzeugt. Anschließend werden noch Löcher in die Grundstruktur eingebracht, um eine Entwässerung durch diese hindurch zu ermöglichen.

Nachteilig an dem aus dem Stand der Technik bekannten Verfahren ist, dass die Strahlung zunächst die erste Polymerfolie 1a durchdringen muss, um zu der darunter angeordneten zweiten Polymerfolie 1b zu gelangen, um diese anzuschmelzen. Im Hinblick auf die dritte Polymerfolie 1c muss der Laserstrahl zudem auch noch die zweite Polymerfolie 1b durchdringen. Dabei besteht die Gefahr, dass die der Strahlenquelle 9 zugewandte erste Polymerfolie 1a zu stark erhitzt wird, was sich negativ auf die Festigkeit der Polymerfolie 1a auswirkt. Dies gilt insbesondere dann, wenn die Polymerfolien verstreckt worden sind, um ihre Zugfestigkeit zu erhöhen. Um die Strahlungsenergie primär an den miteinander in Kontakt zu bringenden Oberflächen der Polymerfolien 1a, 1b, 1c wirken zu haben, ist es in der Praxis üblich, diese zuvor mit einem Absorbermaterial für die Strahlung, insbesondere Laserstrahlung zu beschichten, wie zum Beispiel mit Ruß. Jedoch stellt das Beschichten einen zusätzlichen Prozessschritt dar, was das Verfahren entsprechend aufwendig macht und die Fehleranfälligkeit erhöht.

Ein weiterer Nachteil bei dem bekannten Herstellverfahren besteht darin, dass das helixartig aufgewickelte, bahnförmige Laminat 12 an seinen beiden Seitenrändern miteinander verbunden werden muss, beispielsweise mittels einer Laserschweißnaht, um der fertigen Bespannungsgrundstruktur 8 die benötigte Eigenstabilität zu verleihen. Somit ist für die Herstellung der Bespannungsgrundstruktur 8 ein weiterer Prozessschritt notwendig. Zudem kommt, dass die Bespannungsgrundstruktur 8 im Bereich der Naht andere Eigenschaften aufweisen kann als in ihren übrigen Bereichen, was unter Umständen zu unerwünschten Markierungen in der herzustellenden Faserstoffbahn führen kann.

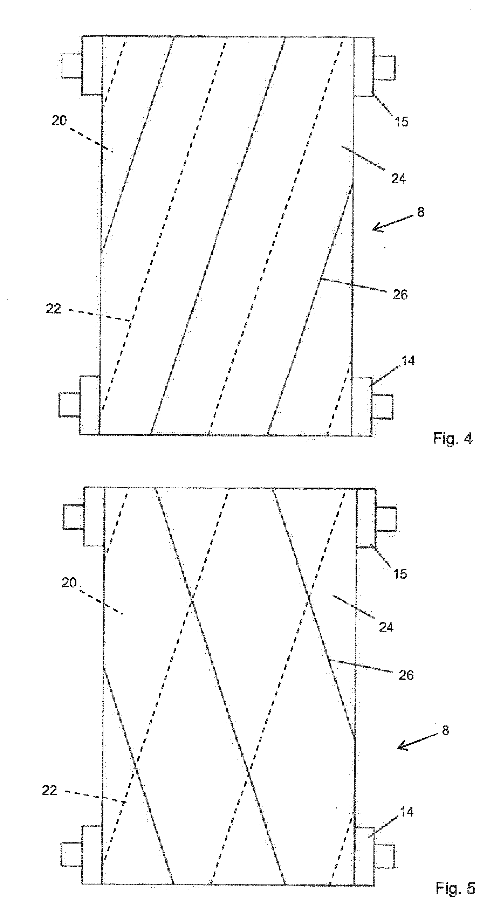

Ein ähnliches Herstellverfahren ist zudem aus der Druckschrift WO 2016/037825 A1 bekannt. Wie in den ersten beiden Absätzen auf Seite 5 dort beschrieben und wie in Figur 4 dort dargestellt, werden zwei Schichten eines Laminats durch einen Nip zwischen zwei Presselementen geführt, wobei Strahlung aus einer Strahlungsquelle durch eines der beiden Presselemente und durch eine der beiden Schichten bis zu einem Absorbermaterial zwischen den beiden Schichten geschickt wird, um die beiden Schichten miteinander zu verschweißen.

Es ist Aufgabe der vorliegenden Erfindung, zumindest einige der zuvor genannten Probleme bei dem bekannten Herstellverfahren zu lösen oder zu verringern.

Diese Aufgabe wird gelöst durch ein Herstellverfahren gemäß Anspruch 1. Vorteilhafte Weiterbildungen der Erfindung sind Gegenstand der Unteransprüche.

Erfindungsgemäß wird das eingangs genannte, gattungsbildende Herstellverfahren dadurch weitergebildet, dass die Strahlung in den Einlaufspalt gerichtet ist. Indem die Strahlung direkt in den Einlaufspalt gerichtet ist, muss sie nicht erst das Polymermaterial einer der beiden Schichten durchdringen, um zu dem Polymermaterial der anderen Schicht zu gelangen. Stattdessen wird sie direkt an den einander zugewandten Oberflächen der beiden zu verbindenden Schichten wirksam. Auf diese Weise kann die Energie gezielt an der Stelle in das Material eingebracht werden, an der das Material auf- bzw. angeschmolzen werden soll, ohne dass hierfür ein die Strahlung speziell absorbierendes Mittel auf diese Oberflächen aufgetragen werden muss. Dies vereinfacht den Herstellungsprozess. Vorzugsweise ist die Strahlenquelle dabei so ausgerichtet, dass ihre Hauptstrahlungsrichtung direkt in den Einlaufspalt weist. Dabei kann die Hauptstrahlungsrichtung orthogonal zu einer gedachten Ebene verlaufen, welche die Achsen der beiden Anpresswalzen umfasst. Hierdurch erfolgt das Auf- bzw. Anschmelzen des Polymers noch näher als im bekannten Herstellverfahren am Pressnipp, so dass mit weniger Energie gearbeitet werden kann, da das auf- bzw. angeschmolzene Polymermaterial auf dem Weg zu Pressnip keine Gelegenheit mehr hat, abzukühlen. Als Strahlenquelle kann bevorzugt ein Laser verwendet werden, also eine Strahlenquelle, die kohärentes Licht ausstrahlt.

Vorzugsweise wird zunächst eine der beiden Schichten hergestellt, indem ein erster bandartiger Folienstreifen, dessen Breite geringer als die Breite der herzustellenden Bespannungsgrundstruktur ist, helixartig um zwei zueinander beabstandete Wickelwalzen gewickelt wird. Dies entspricht im Wesentlichen dem zuvor im Hinblick auf Figur 2 beschriebenen Verfahren aus dem Stand der Technik, wobei jedoch aus Kostengründen der erste bandartige Folienstreifen vorzugsweise selbst nicht aus einem Laminat gebildet ist, sondern eine im Wesentlichen monolithisch hergestellte Folie ist. Zum Beispiel kann es sich dabei um eine extrudierte Folie handeln, die zwecks Erhöhung der Zugfestigkeit in Längsrichtung stark verstreckt worden ist.

Ein Vorteil der helixartigen Wicklung besteht darin, dass Grundstrukturen für Papiermaschinenbespannungen unterschiedlicher Länge und Breite relativ einfach und somit kostengünstig aus demselben Ausgangsmaterial, d.h. aus dem bandartigen Folienstreifen, gefertigt werden können. Zudem ist es nicht notwendig, zum Endlosmachen der Bespannungsgrundstruktur eine Quernaht an dieser vorzusehen, was nicht nur das Herstellverfahren vereinfacht, sondern auch das Risiko von Markierungen in der auf der Bespannung herzustellenden Faserstoffbahn reduziert.

Eine positive Weiterentwicklung der Erfindung sieht vor, dass auch die andere der beiden Schichten hergestellt wird, indem ein zweiter bandartiger Folienstreifen, dessen Breite geringer als die Breite der herzustellenden Bespannungsgrundstruktur ist, helixartig um zwei zueinander beabstandete Wickelwalzen gewickelt wird. Dabei wird vorzugsweise gleichzeitig der zweite bandartige Folienstreifen auf die erste Schicht auflaminiert.

Anders als in der eingangs genannten WO 2015/185278 A1 beschrieben, wird somit nicht erst ein Laminat in Form eines bandartigen Streifens gebildet und dieser anschließend helixartig aufgewickelt, sondern das Laminat entsteht erst, wenn die erste Schicht der Grundstruktur bereits vollständig gebildet ist. Dies hat den Vorteil, dass das Auflaminieren der zweiten Schicht auf die erste Schicht nicht nur für einen Verbund zwischen diesen beiden Schichten sorgt, sondern zugleich auch einen separat ausgebildeten Verbund zwischen den beiden Seitenrändern eines jeweiligen bandartigen Folienstreifens überflüssig macht. Somit können zwar die zuvor genannten Vorteile, die eine helixartige Wicklung mit sich bringt, beibehalten werden, jedoch kann das Herstellungsverfahren stark vereinfacht werden.

Alternativ lassen sich die eben beschriebenen Vorteile natürlich auch dadurch verwirklichen, dass zwei oder mehr Wickelköpfe direkt hintereinander betrieben werden, so dass der zweite Wickelkopf bereits anfangen kann, den zweiten bandartigen Folienstreifen auf den bereits teilweise aufgewickelten ersten bandartigen Folienstreifen aufzubringen, wobei jedoch die erste Schicht, die durch den ersten bandartigen Folienstreifen gebildet wird, noch nicht vollständig ausgebildet ist. Auf diese Weise kann der Herstellungsprozess auf vorteilhafte Weise beschleunigt werden.

Damit auf einen separat ausgebildeten Verbund zwischen den beiden Seitenrändern eines jeweiligen bandartigen Folienstreifens verzichtet werden kann, müssen sich die aus bandartigen Folienstreifen bestehenden Schichten passend überlagen. Hierzu wird vorgeschlagen, dass die Seitenränder des ersten bandartigen Folienstreifens parallel aber versetzt zu den Seitenrändern des zweiten bandartigen Folienstreifens verlaufen. Alternativ wird vorgeschlagen, dass die Seitenränder des ersten bandartigen Folienstreifens nicht parallel zu den Seitenrändern des zweiten bandartigen Folienstreifens verlaufen, d.h. die Seitenränder mit einem Winkel zueinander ausgerichtet sind. An dieser Stelle sei angemerkt, dass unter "bandartigem Folienstreifen" bevorzugt ein Folienstreifen verstanden wird, der eine im Wesentlichen rechteckige Grundform aufweist. Die Dicke des Folienstreifens ist dabei gegenüber den Abmessungen der Seitenkanten des Folienstreifens verschwindend gering und vorzugsweise kleiner als 1 mm, weiter bevorzugt kleiner als 300µm. Zudem ist die Abmessung der beiden Seitenkanten des Folienstreifens um ein Vielfaches größer als die Abmessung der beiden Stirnkanten des Folienstreifens.

Wie bereits erwähnt, ist es fertigungstechnisch von Vorteil, wenn die beiden aneinandergrenzenden Seitenränder des helixartig aufgewickelten ersten und/oder zweiten bandartigen Folienstreifens frei von einer direkten kraft-, form- oder stoffschlüssigen Verbindung miteinander sind. Die beiden bandartigen Folienstreifen behalten ihre Form als helixartige Wicklung ausschließlich durch die Anbindung, insbesondere das Verschweißen, des zweiten bandartigen Folienstreifens auf dem ersten bandartigen Folienstreifen bei.

Besonders einfach kann der apparative Aufbau zur Herstellung der Bespannungsgrundstruktur ausfallen, wenn die beiden Wickelwalzen zum Wickeln des ersten bandartigen Folienstreifens identisch mit den beiden Wickelwalzen zum Wickeln des zweiten bandartigen Folienstreifens sind, wobei vorzugsweise eine der beiden Wickelwalzen zudem identisch mit einem der beiden Anpresswalzen ist. Somit werden insgesamt nur drei Walzen benötigt.

Vorzugsweise werden zum Verbinden der beiden Schichten zwischen diese keine Hilfsstoffe eingebracht, insbesondere kein Klebstoff und/oder die Strahlung besonders absorbierendes Material, wie zum Beispiel Ruß. Dies spart Zeit und Kosten beim Herstellungsprozess. Dort, wo dies jedoch notwendig ist, insbesondere um die benötigten Festigkeitseigenschaften im Verbund zu erzielen, kann es jedoch von Vorteil sein, derartige Hilfsstoffe, insbesondere Klebstoff und/oder die Strahlung besonders absorbierendes Material, wie zum Beispiel Ruß, zwischen die zu verbindenden Schichten einzubringen. Insbesondere kann ein Material zur Plasma- bzw. Coronaaktivierung vorgesehen sein.

Die Bespannungsgrundstruktur kann zusätzlich auf relativ einfache Weise mit vorteilhaften Fähigkeiten versehen werden, wenn sich das Polymermaterial der ersten Schicht von dem Polymermaterial der zweiten Schicht unterscheidet. Beispielsweise kann das Polymermaterial der ersten Schicht im Wesentlichen aus Polyamid bzw. PA gebildet sein und das Polymermaterial der zweiten Schicht im Wesentlichen aus Polyethylenterephthalat bzw. PET gebildet sein, wobei die erste Schicht vorzugsweise radial innen gegenüber der zweiten Schicht in der fertig hergestellten Bespannungsgrundstruktur angeordnet ist. PA hat gegenüber PET eine höhere Abrasionsbeständigkeit, was insbesondere für die radial innen gelegene Laufseite der Bespannung wichtig ist, wohingegen PET dimensionsstabilier als PA ist. Weist das fertige Laminat der Grundstruktur mehr als zwei Schichten auf, so können zwischen einer radial äußersten Schicht aus PET und einer radial innersten Schicht auch PA auch noch Schichten aus anderen oder denselben Materialien vorgesehen sein. Mit anderen Worten kommt es nur darauf an, dass die radial äußerste Schicht des Laminats aus PET als Grundwerkstoff und die radial innerste Schicht des Laminats aus PA als Grundwerkstoff gebildet ist.

Ferner kann auch wenigstens eine Schicht durch Fasern verstärkt sein. Beispielsweise können Glasfasern in einer Matrix aus PP oder PET eingebettet sein. Weist das fertige Laminat der Grundstruktur mehr als zwei Schichten auf, so ist es besonders vorteilhaft, wenn die oder wenigstens eine mittlere Schicht mit Fasern verstärkt ist. Da die Bespannung nämlich im bestimmungsgemäßen Betrieb der Maschine endlos umläuft, ist sie an verschiedenen Stellen im Umlauf unterschiedlichen Belastungen ausgesetzt. Dabei gilt, dass die Bespannung in der mittleren Lage weniger auf Zug oder Druck beansprucht wird als in den äußeren Lagen. Somit kann die oder wenigstens eine mittlere Lage vorteilhaft dazu verwendet werden, weniger flexibles, faserverstärktes Material aufzunehmen, welches dafür besonders gut geeignet ist, hohe Zugkräfte in Maschinenrichtung zu übertragen.

Die Schichten können sich jedoch alternativ oder zusätzlich auch hinsichtlich anderer Eigenschaften als dem Polymergrundmaterial unterscheiden. Beispielsweise können die Schichten eingefärbt sein und sich hinsichtlich ihrer Farben unterscheiden. Auch andere optische Eigenschaften, wie Fluoreszenz oder Reflexionseigenschaften, können bei den verschiedenen Schichten, beispielsweise durch Zugabe spezieller Additive, unterschiedlich stark ausgeprägt sein. Der Vorteil besteht darin, dass diese Schichten dann als Verschleißindikatoren dienen können. Ist eine Schicht fast vollständig abradiert, so scheint die die darunter liegende Schicht durch, was entweder visuell mit dem bloßen Auge oder unter Hilfe entsprechender elektronischer Mittel leicht erkannt werden kann. Die Erkennung kann sogar im laufenden Betrieb der Maschine zur Faserstoffbahnherstellung bzw. -verarbeitung zuverlässig erfolgen und somit dem Betreiber einen zeitigen Hinweis geben, dass die Bespannung repariert oder ausgewechselt werden muss, um ein Versagen oder Qualitätseinbußen an der Faserstoffbahn zu vermeiden.

Wie dies auch detailliert in der WO 2015/185278 A1 beschrieben ist, umfasst das erfindungsgemäße Verfahren vorzugsweise ferner den Schritt des Einbringens einer Mehrzahl von Durchgangsöffnungen in das aus wenigstens zwei Schichten gebildete Laminat. Diese Durchgangsöffnungen dienen dazu, die Faserstoffbahn bei Bedarf entwässern zu können, also Flüssigkeit aus der Faserstoffbahn durch die Grundstruktur hindurch abzuleiten. Die Durchgangsöffnungen können zum Beispiel gestanzt oder gebohrt, insbesondere mit einem Laser gebohrt, werden.

Ein weiterer Aspekt der vorliegenden Erfindung betrifft eine Bespannung für den Einsatz in einer eine Faserstoffbahn herstellenden und/oder verarbeitenden Maschine, wobei die Bespannung eine Grundstruktur umfasst, die nach dem zuvor beschriebenem Verfahren hergestellt worden ist. Beispielsweise kann es sich dabei um die Bespannung in der Formiersektion oder der Pressensektion einer Papier- oder Kartonmaschine handeln. Bei dem Einsatz der Bespannung als Formiersieb, kann die Bespannungsgrundstruktur, welche aus dem mehrere Schichten aufweisenden Laminat besteht und mit Durchgangsöffnungen versehen ist, bereits im Wesentlichen das fertige Produkt, also das Formiersieb darstellen. Beim Einsatz der Bespannung als Pressfilz, ist es notwendig, auf die Grundstruktur noch wenigstens eine Filzschicht aufzubringen. Ferner kann die Bespannung zum Beispiel auch als Trockensieb verwendet werden.

Die erfindungsgemäße Bespannungsgrundstruktur weist ein wenigstens zwei Schichten umfassendes Laminat auf, wobei die beiden Schichten jeweils aus einem helixartig aufgewickelten, bandartigen Folienstreifen bestehen und wobei die beiden Schichten flächig miteinander verschweißt sind und zwischen den beiden Schichten keine Hilfsstoffe vorhanden sind.

Ganz besonders bevorzugt sind die beiden Seitenränder eines jeweiligen bandartigen Folienstreifens dabei frei von einer direkten kraft-, form- oder stoffschlüssigen Verbindung miteinander.

Die Erfindung wird nachfolgend anhand von schematischen und nicht maßstabsgetreuen Zeichnungen weiter erläutert. Es zeigen
- Figur 3: eine schematische Darstellung einer Vorrichtung zur Herstellung einer Bespannungsgrundstruktur,
- Figur 4: eine erste Ausführungsform einer Bespannungsgrundstruktur,
- Figur 5: eine zweite Ausführungsform einer Bespannungsgrundstruktur.

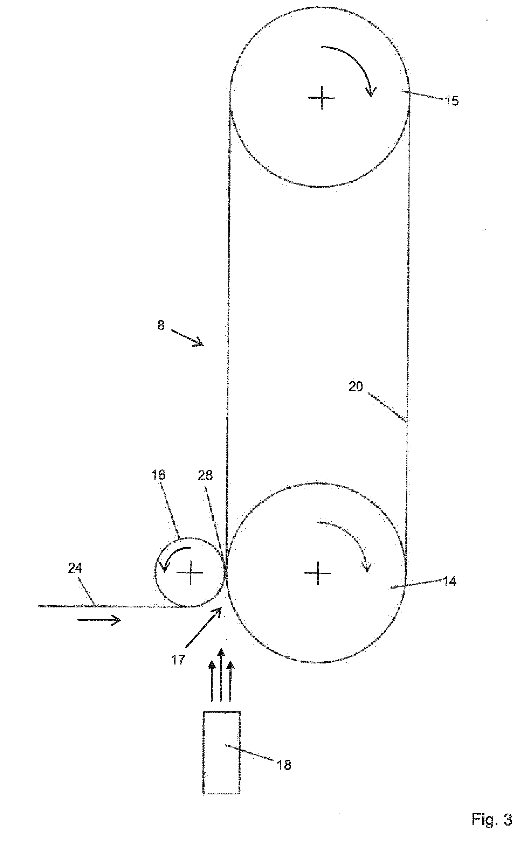

Figur 3 zeigt eine Vorrichtung zur Durchführung des erfindungsgemäßen Verfahrens zur Herstellung einer Grundstruktur 8 einer Bespannung für den Einsatz in einer eine Faserstoffbahn herstellenden und/oder verarbeitenden Maschine. Bei der Bespannung kann es sich zum Beispiel um das Formiersieb einer Papiermaschine handeln. Die Vorrichtung umfasst als wesentliche Elemente drei Walzen, nämlich eine erste Wickelwalze 14, eine zweite Wickelwalze 15 und eine erste Anpresswalze 16, sowie eine Strahlenquelle 18, wie zum Beispiel einen Laser. Die erste Wickelwalze 14 fungiert bei dieser Anordnung zugleich als zweite Anpresswalze. Die jeweilige Drehrichtung der drei Walzen 14, 15, 16 im bestimmungsgemäßen Gebrauch ist durch einen gebogenen Pfeil und ihre jeweilige Drehachse ist durch ein Kreuz in Figur 3 angedeutet.

In einem ersten Prozessschritt wird die erste Anpresswalze 16 jedoch noch nicht benötigt. In diesem Verfahrensschritt wird ein erster bandartiger Folienstreifen 20 helixartig um die beiden Wickelwalzen 14 und 15 gewickelt, bis die gewünschte Breite der Bespannungsgrundstruktur 8, welche der Breite der finalen Bespannung im Wesentlichen entsprechen kann, erreicht ist. Zur Variation der gewünschten Länge der Bespannungsgrundstruktur 8 lässt sich der Abstand zwischen den beiden Wickelwalzen 14, 15 variieren. Auf diese Weise entsteht eine erste, radial innere Schicht für ein Laminat der herzustellenden Bespannungsgrundstruktur 8. Diese erste Schicht sieht im Wesentlichen so aus, wie die im Hinblick auf Figur 2 beschriebene Anordnung, wobei das Laminat 12 jedoch gedanklich durch den ersten bandartigen Folienstreifen 20 zu ersetzen ist.

An dieser Stelle sei nochmals darauf hingewiesen, dass es sich bei den Figuren um rein schematische Darstellungen handelt. In der Realität kann der Abstand zwischen den Wickelwalzen 14, 15 deutlich größer sein und kann die Breite des Laminats 12 bzw. des bandartigen Folienstreifens 20 deutlich kleiner sein, so dass die beiden Wickelwalzen 14, 15 von wesentlich mehr Windungen umwickelt werden als in den Figuren dargestellt. Auch kann der Winkel, mit dem gewickelt wird, also der Winkel zwischen Seitenrand 22 (siehe Figuren 4 und 5) und der Drehachse einer der beiden Wickelwalzen 14, 15, anders, insbesondere kleiner, sein.

Der erste bandartige Folienstreifen 20 ist vorzugsweise eine extrudierte Polyamid-Folie mit einem im Wesentlichen monolithischen Aufbau. Somit handelt es sich hierbei nicht bereits selbst um ein mehrere Schichten umfassendes Laminat wie in der WO 2015/185278 A1, wobei dies auch möglich wäre.

In einem zweiten Prozessschritt wird radial außen auf die erste Schicht eine zweite Schicht auflaminiert. Die zweite Schicht besteht dabei aus einem zweiten bandartigen Folienstreifen 24, der ebenfalls über die beiden Wickelwalzen 14, 15 helixartig aufgewickelt wird. Während des Aufwickelns des zweiten bandartigen Folienstreifens 24 werden das Polymermaterial der ersten Schicht und das Polymermaterial des die zweite Schicht bildenden zweiten bandartigen Folienstreifens 24 an ihren sich jeweils gegenüberliegenden Oberflächen lokal aufgeschmolzen und unmittelbar danach aneinandergedrückt, um zu miteinander verschweißen und somit ein Laminat zu bilden. Die besagten Oberflächen kommen in einem durch die beiden Anpresswalzen 14, 16 gebildeten Pressnip 28 miteinander in Kontakt, wo sie mit einer vorbestimmten Kraft gegeneinander gedrückt werden. Aufgeschmolzen wird das Polymermaterial an den besagten Oberflächen durch Strahlung, insbesondere Laserstrahlung, aus der Strahlenquelle 18. Diese ist so positioniert, dass die Strahlung erfindungsgemäß in einen Einlaufspalt 17 gerichtet ist, also in den Spalt, der von der ersten Schicht und dem die zweite Schicht bildenden zweiten bandartigen Folienstreifen 24 gebildet wird und der in dem Pressnip 28 mündet. In dem vorliegenden Ausführungsbeispiel ist die mit Pfeilen in Figur 3 dargestellte Strahlung aus der Strahlenquelle 18 hinsichtlich ihrer Hauptstrahlungsrichtung im Wesentlichen orthogonal zu einer gedachten Ebene orientiert, welche die Drehachsen der beiden Anpresswalzen 14, 16 umfasst. Somit gelangt die Strahlung genau lokal an den Ort, wo sie benötigt wird.

Der zweite bandartige Folienstreifen 24 kann dabei so um die beiden Wickelwalzen 14, 15 gewickelt werden, dass seine Seitenränder 26 parallel aber mit einem Abstand zu den Seitenrändern 22 des ersten bandartigen Folienstreifens 20 der ersten Schicht verlaufen, wie in Figur 4 dargestellt. Alternativ kann der zweite bandartige Folienstreifen 24 jedoch auch so um die beiden Wickelwalzen 14, 15 gewickelt werden, dass seine Seitenränder 26 nicht parallel zu den Seitenrändern 22 des ersten bandartigen Folienstreifens 20 der ersten Schicht verlaufen, sondern diese kreuzen, wie in Figur 5 dargestellt. In den Figuren 4 und 5 ist der erste bandartige Folienstreifen 20 mit seinen Seitenrändern 22 nur gestrichelt dargestellt, da er von dem die zweite Schicht bildenden zweiten bandartigen Folienstreifen 24 verdeckt wird.

Die beiden Seitenränder 22 des ersten bandartigen Folienstreifens 20 liegen vorzugsweise auf Stoß zusammen, ohne dass sie miteinander form-, kraft- oder stoffschlüssig direkt verbunden sind. Ebenso liegen vorzugsweise die beiden Seitenränder 26 des zweiten bandartigen Folienstreifens 24 auf Stoß zusammen, ohne dass sie miteinander form-, kraft oder stoffschlüssig direkt miteinander verbunden sind.

Die beiden bandartigen Folienstreifen bleiben dadurch in ihrer gewickelten Form, dass die beiden Schichten flächig aufeinander laminiert sind.

Bei dem zweiten bandartigen Folienstreifen 24 handelt es sich bevorzugt um eine extrudierte Polyethylenterephthalat-Folie mit einem im Wesentlichen monolithischen Aufbau. Somit besteht die zweite Schicht des Laminats aus einem anderen Polymerwerkstoff als die erste Schicht. Auf diese Weise können verschiedene Werkstoffeigenschaften vorteilhaft in dem Laminat kombiniert werden. Zudem können beide Schichten unterschiedlich eingefärbt sein, um als Verschleißindikator zu fungieren. Beide Schichten weisen vorzugsweise eine Schichtdicke von 500µm oder weniger auf. Die Gesamtdicke der Grundstruktur beträgt vorzugsweise 1200µm oder weniger. Die beiden Folienstreifen können, vorzugsweise in ihrer Haupterstreckungsrichtung gereckt sein, um die Festigkeit zu erhöhen. Ferner kann das Laminat auch mehr als zwei Schichten umfassen, wobei eine dritte Schicht im Wesentlichen genauso auf die zweite Schicht aufgebracht werden kann, wie die zweite Schicht auf der ersten Schicht aufgebracht wurde. Dasselbe gilt für alle weiteren Schichten.

Nach der Fertigstellung des Laminats kann dieses noch mit einer Vielzahl von Durchgangsbohrungen versehen werden, der Grundstruktur die Fähigkeit zu verleihen, eine auf der fertigen Bespannung transportierte Faserstoffbahn zu entwässern. Die Durchgangsbohrungen können zum Beispiel durch Stanzen oder durch Bohren eingebracht werden. Für letzteres bietet sich besonders die Verwendung eines Lasers an.

### Bezugszeichenliste:

- 1a, 1b, 1c: Polymerfolien
- 8: (Bespannungs-)Grundstruktur
- 9: Strahlenquelle
- 10, 11: Anpresswalzen
- 12: Laminat
- 14, 15: Wickelwalzen
- 16: Anpresswalze
- 17: Einlaufspalt
- 18: Strahlenquelle
- 20: erster bandartiger Folienstreifen
- 22: Seitenrand des ersten bandartigen Folienstreifens
- 24: zweiter bandartiger Folienstreifen
- 26: Seitenrand des zweiten bandartigen Folienstreifens
- 28: Pressnip

## Patentansprüche

1. Verfahren zur Herstellung einer Grundstruktur (8) einer Bespannung für den Einsatz in einer eine Faserstoffbahn herstellenden und/oder verarbeitenden Maschine, wobei die Bespannungsgrundstruktur (8) ein aus wenigstens zwei Schichten gebildetes Laminat aufweist und die Schichten im Wesentlichen aus Polymermaterial gebildet sind,
wobei das Verfahren die folgenden Schritte umfasst:
- lokales Aufschmelzen des Polymermaterials der beiden Schichten durch Strahlungseinwirkung aus einer Strahlenquelle (18) und
- Aufeinanderpressen des aufgeschmolzenen Polymermaterials der beiden Schichten, wobei hierzu das Polymermaterial der beiden Schichten unter Ausbildung eines Einlaufspalts (17) in einen durch zwei Anpresswalzen (14, 16) gebildeten Pressnip (28) geführt wird,
**dadurch gekennzeichnet, dass** die Strahlung direkt in den Einlaufspalt (17) gerichtet ist, so dass sie nicht erst das Polymermaterial einer der beiden Schichten durchdringen muss, um zu dem Polymermaterial der anderen Schicht zu gelangen.

2. Verfahren nach Anspruch 1, **dadurch gekennzeichnet, dass** zunächst eine der beiden Schichten hergestellt wird, indem ein erster bandartiger Folienstreifen (20), dessen Breite geringer als die Breite der herzustellenden Bespannungsgrundstruktur (8) ist, helixartig um zwei zueinander beabstandete Wickelwalzen (14, 15) gewickelt wird.

3. Verfahren nach Anspruch 2, **dadurch gekennzeichnet, dass** die andere der beiden Schichten hergestellt wird, indem ein zweiter bandartiger Folienstreifen (24), dessen Breite geringer als die Breite der herzustellenden Bespannungsgrundstruktur (8) ist, helixartig um zwei zueinander beabstandete Wickelwalzen (14, 15) gewickelt wird, wobei gleichzeitig der zweite bandartige Folienstreifen (24) auf die erste Schicht auflaminiert wird.

4. Verfahren nach Anspruch 3, **dadurch gekennzeichnet, dass** die Seitenränder (22) des ersten bandartigen Folienstreifens (20) parallel aber versetzt zu den Seitenrändern (26) des zweiten bandartigen Folienstreifens (24) verlaufen.

5. Verfahren nach Anspruch 3, **dadurch gekennzeichnet, dass** die Seitenränder (22) des ersten bandartigen Folienstreifens (20) nicht parallel zu den Seitenrändern (26) des zweiten bandartigen Folienstreifens (24) verlaufen.

6. Verfahren nach einem der Ansprüche 3 bis 5, **dadurch gekennzeichnet, dass** die beiden aneinandergrenzenden Seitenränder (22, 24) des helixartig aufgewickelten ersten und/oder zweiten bandartigen Folienstreifens (20, 24) frei von einer direkten kraft-, form- oder stoffschlüssigen Verbindung miteinander sind.

7. Verfahren nach einem der Ansprüche 3 bis 6, **dadurch gekennzeichnet, dass** die beiden Wickelwalzen (14, 15) zum Wickeln des ersten bandartigen Folienstreifens (20) identisch mit den beiden Wickelwalzen (14, 15) zum Wickeln des zweiten bandartigen Folienstreifens (24) sind, wobei vorzugsweise eine der beiden Wickelwalzen (14) zudem identisch mit einem der beiden Anpresswalzen (14) ist.

8. Verfahren nach einem der vorhergehenden Ansprüche, **dadurch gekennzeichnet, dass** zum Verbinden der beiden Schichten zwischen diese keine Hilfsstoffe eingebracht werden, insbesondere kein Klebstoff und/oder die Strahlung besonders absorbierendes Material, wie zum Beispiel Ruß.

9. Verfahren nach einem der vorhergehenden Ansprüche, **dadurch gekennzeichnet, dass** sich das Polymermaterial der ersten Schicht von dem Polymermaterial der zweiten Schicht unterscheidet.

10. Verfahren nach Anspruch 9, **dadurch gekennzeichnet, dass** das Polymermaterial der ersten Schicht im Wesentlichen aus Polyamid gebildet ist und das Polymermaterial der zweiten Schicht im Wesentlichen aus Polyethylenterephthalat gebildet ist, wobei die erste Schicht vorzugsweise radial innen gegenüber der zweiten Schicht in der fertig hergestellten Bespannungsgrundstruktur (8) angeordnet ist.

11. Verfahren nach Anspruch 9 oder 10, **dadurch gekennzeichnet, dass** die erste Schicht eine von der zweiten Schicht unterschiedliche optische Eigenschaft, insbesondere Farbe, aufweist.

12. Verfahren nach einem der vorhergehenden Ansprüche, **dadurch gekennzeichnet, dass** das Verfahren ferner den folgenden Schritt umfasst:
- Einbringen einer Mehrzahl von Durchgangsöffnungen in das aus wenigstens zwei Schichten gebildete Laminat.

13. Bespannung für den Einsatz in einer eine Faserstoffbahn herstellenden und/oder verarbeitenden Maschine, wobei sie eine Grundstruktur (8) umfasst, die nach einem der vorherigen Ansprüche hergestellt worden ist, wobei die Bespannungsgrundstruktur (8) ein wenigstens zwei Schichten umfassendes Laminat aufweist, wobei die beiden Schichten jeweils aus einem helixartig aufgewickelten bandartigen Folienstreifen (20, 24) bestehen und wobei die beiden Schichten flächig miteinander verschweißt sind und zwischen den beiden Schichten keine Hilfsstoffe vorhanden sind.

14. Bespannung nach Anspruch 13, wobei die beiden Seitenränder (22, 26) eines jeweiligen bandartigen Folienstreifens (20, 24) frei von einer direkten kraft-, form- oder stoffschlüssigen Verbindung miteinander sind.

## Claims

1. Method for producing a base structure (8) of a fabric for use in a machine which produces and/or processes a fibrous web, wherein the fabric base structure (8) has a laminate which is formed from at least two layers, and the layers are formed substantially from polymer material,
wherein the method comprises the following steps:
- locally melting the polymer material of the two layers by irradiation from a radiation source (18), and
- pressing the molten polymer material of the two layers together, wherein, for this purpose, the polymer material of the two layers is guided, forming a run-in gap (17), into a press nip (28) formed by two pressing rolls (14, 16),
**characterized in that** the radiation is directed directly into the run-in gap (17) in such a way that said radiation does not first have to penetrate the polymer material of one of the two layers in order to reach the polymer material of the other layer.

2. Method according to Claim 1, **characterized in that**, firstly, one of the two layers is produced by virtue of a first band-like film strip (20), the width of which is smaller than the width of the fabric base structure (8) to be produced, being wound helically around two mutually spaced-apart winding rolls (14, 15) .

3. Method according to Claim 2, **characterized in that** the other of the two layers is produced by virtue of a second band-like film strip (24), the width of which is smaller than the width of the fabric base structure (8) to be produced, being wound helically around two mutually spaced-apart winding rolls (14, 15), wherein, at the same time, the second band-like film strip (24) is laminated onto the first layer.

4. Method according to Claim 3, **characterized in that** the side edges (22) of the first band-like film strip (20) run parallel but offset with respect to the side edges (26) of the second band-like film strip (24).

5. Method according to Claim 3, **characterized in that** the side edges (22) of the first band-like film strip (20) do not run parallel with respect to the side edges (26) of the second band-like film strip (24) .

6. Method according to one of Claims 3 to 5, **characterized in that** the two mutually adjacent side edges (22, 24) of the helically wound first and/or second band-like film strip (20, 24) have no direct force-fitting, form-fitting or cohesive connection to one another.

7. Method according to one of Claims 3 to 6, **characterized in that** the two winding rolls (14, 15) for the winding of the first band-like film strip (20) are identical to the two winding rolls (14, 15) for the winding of the second band-like film strip (24), wherein, preferably, one of the two winding rolls (14) is furthermore identical to one of the two pressing rolls (14).

8. Method according to one of the preceding claims, **characterized in that**, for the connection of the two layers, no auxiliary substances, in particular no adhesive and/or material which is particularly absorbent for the radiation, such as for example soot, are introduced between said layers.

9. Method according to one of the preceding claims, **characterized in that** the polymer material of the first layer differs from the polymer material of the second layer.

10. Method according to Claim 9, **characterized in that** the polymer material of the first layer is formed substantially from polyamide, and the polymer material of the second layer is formed substantially from polyethylene terephthalate, wherein the first layer is preferably arranged radially at the inside in relation to the second layer in the fully produced fabric base structure (8).

11. Method according to Claim 9 or 10, **characterized in that** the first layer has a different visual characteristic, in particular colour, in relation to the second layer.

12. Method according to one of the preceding claims, **characterized in that** the method furthermore comprises the following step:
- forming a multiplicity of passage openings into the laminate formed from at least two layers.

13. Fabric for use in a machine which produces and/or processes a fibrous web, wherein said fabric comprises a base structure (8) which has been produced according to one of the preceding claims, wherein the fabric base structure (8) has a laminate which comprises at least two layers, wherein the two layers are each composed of a helically wound band-like film strip (20, 24), and wherein the two layers are in areas fused to one another and no auxiliary substances are present between the two layers.

14. Fabric according to Claim 13, wherein the two side edges (22, 26) of a respective band-like film strip (20, 24) have no direct force-fitting, form-fitting or cohesive connection to one another.

## Revendications

1. Procédé de fabrication d'une structure de base (8) d'un entoilage pour utilisation dans une machine produisant et/ou traitant une bande de matière fibreuse, la structure de base d'entoilage (8) présentant un stratifié formé d'au moins deux couches, et les couches étant essentiellement formées de matériau polymère,
le procédé comprenant les étapes suivantes :
- la fusion locale du matériau polymère des deux couches sous l'effet d'un rayonnement provenant d'une source de rayonnement (18) et
- le pressage du matériau polymère fondu des deux couches l'une sur l'autre, le matériau polymère des deux couches étant à cet effet introduit, en formant une fente d'entrée (17), dans une ligne de contact (28) formée par deux cylindres de pressage (14, 16),
**caractérisé en ce que** le rayonnement est dirigé directement dans la fente d'entrée (17), de telle sorte qu'il ne doit pas d'abord traverser le matériau polymère de l'une des deux couches pour atteindre le matériau polymère de l'autre couche.

2. Procédé selon la revendication 1, **caractérisé en ce que** l'une des deux couches est tout d'abord produite en enroulant en hélice autour de deux cylindres d'enroulement (14, 15) espacés l'un de l'autre une première bande de film (20) de type ruban, dont la largeur est inférieure à la largeur de la structure de base d'entoilage (8) à produire.

3. Procédé selon la revendication 2, **caractérisé en ce que** l'autre des deux couches est produite en enroulant en hélice autour de deux cylindres d'enroulement (14, 15) espacés l'un de l'autre une deuxième bande de film (24) de type ruban, dont la largeur est inférieure à la largeur de la structure de base d'entoilage (8) à produire, la deuxième bande de film (24) de type ruban étant simultanément stratifiée sur la première couche.

4. Procédé selon la revendication 3, **caractérisé en ce que** les bords latéraux (22) de la première bande de film (20) de type ruban sont parallèles mais décalés par rapport aux bords latéraux (26) de la deuxième bande de film (24) de type ruban.

5. Procédé selon la revendication 3, **caractérisé en ce que** les bords latéraux (22) de la première bande de film (20) de type ruban ne sont pas parallèles aux bords latéraux (26) de la deuxième bande de film (24) de type ruban.

6. Procédé selon l'une quelconque des revendications 3 à 5, **caractérisé en ce que** les deux bords latéraux adjacents (22, 24) de la première et/ou de la deuxième bande de film (20, 24) de type ruban enroulée en hélice sont exempts d'une liaison directe par adhérence, par complémentarité de forme ou de matière entre eux.

7. Procédé selon l'une quelconque des revendications 3 à 6, **caractérisé en ce que** les deux cylindres d'enroulement (14, 15) pour enrouler la première bande de film (20) de type ruban sont identiques aux deux cylindres d'enroulement (14, 15) pour enrouler la deuxième bande de film de type ruban (24), de préférence l'un des deux cylindres d'enroulement (14) étant en outre identique à l'un des deux cylindres de pressage (14).

8. Procédé selon l'une quelconque des revendications précédentes, **caractérisé en ce que**, pour relier les deux couches, aucun adjuvant n'est introduit entre elles, notamment aucune colle et/ou aucun matériau particulièrement absorbant pour le rayonnement, tel que par exemple le noir de carbone.

9. Procédé selon l'une quelconque des revendications précédentes, **caractérisé en ce que** le matériau polymère de la première couche est différent du matériau polymère de la deuxième couche.

10. Procédé selon la revendication 9, **caractérisé en ce que** le matériau polymère de la première couche est essentiellement formé de polyamide et le matériau polymère de la deuxième couche est essentiellement formé de polyéthylène téréphtalate, la première couche étant de préférence agencée radialement vers l'intérieur par rapport à la deuxième couche dans la structure de base d'entoilage (8) finie.

11. Procédé selon la revendication 9 ou 10, **caractérisé en ce que** la première couche présente une propriété optique, notamment une couleur, différente de celle de la deuxième couche.

12. Procédé selon l'une quelconque des revendications précédentes, **caractérisé en ce que** le procédé comprend en outre l'étape suivante :
- la réalisation d'une pluralité d'ouvertures traversantes dans le stratifié formé d'au moins deux couches.

13. Entoilage pour utilisation dans une machine produisant et/ou traitant une bande de matière fibreuse, celui-ci comprenant une structure de base (8) qui a été produite selon l'une quelconque des revendications précédentes, la structure de base d'entoilage (8) présentant un stratifié comprenant au moins deux couches, les deux couches étant constituées chacune d'une bande de film (20, 24) de type ruban enroulée en hélice, et les deux couches étant soudées à plat l'une à l'autre et aucune matière auxiliaire n'étant présente entre les deux couches.

14. Entoilage selon la revendication 13, dans lequel les deux bords latéraux (22, 26) d'une bande de film respective (20, 24) de type ruban sont exempts d'une liaison directe par adhérence, par complémentarité de forme ou de matière entre eux.
